## Europäisches Patentamt
## European Patent Office
## Office européen des brevets

(19)

(11) Publication number:

# 0 016 825
## B1

# EUROPEAN PATENT SPECIFICATION

(45) Date of publication of patent specification: 04.07.84

(51) Int. Cl.³: **F 03 B 5/00, B 65 G 53/30**

(21) Application number: 79901179.6

(22) Date of filing: 30.08.79

(86) International application number:
PCT/US79/00671

(87) International publication number:
WO 80/00471 20.03.80 Gazette 80/6

(54) METHOD AND APPARATUS FOR PUMPING LARGE SOLID ARTICLES.

(30) Priority: 30.08.78 US 938223

(43) Date of publication of application:
15.10.80 Bulletin 80/21

(45) Publication of the grant of the patent:
04.07.84 Bulletin 84/27

(84) Designated Contracting States:
AT CH DE FR GB NL

(73) Proprietor: GURTH, Max Ira
1781 Carob Tree Lane
El Cajon, CA 92021 (US)

(72) Inventor: GURTH, Max Ira
1781 Carob Tree Lane
El Cajon, CA 92021 (US)

(74) Representative: Wilson, Nicholas Martin et al,
WITHERS & ROGERS 4 Dyer's Buildings Holborn
London EC1N 2JT (GB)

(56) References cited:
EP - A - 0 002 592
WO - A - 80/00472
CH - A - 393 092
FR - A - 2 292 882
GB - A - 1 461 776
US - A - 1 061 142

THE PRODUCTION ENGINEERING MAGAZINE,
vol. 22, no. 8, August 1975, Penton/IPC,
Cleveland, Ohio, US, "Bladeless wheel molecular
attraction create unique pump", page 11

(56) References cited:
VDI-ZEITUNG, no. 4, March 1971, vol. 113, VDI
Verlag GmbH, Düsseldorf, DE, P. WILDENHOF:
"Ältere und neuere Entwicklungsrichtungen bei
der Konstruktion von Schraubenverdichtern",
page 225, figure 19

The file contains technical information
submitted after the application was filed and not
included in this specification

Courier Press, Leamington Spa, England.

## Description

Background of the Invention

The present invention relates to pumps and pertains particularly to method and apparatus for pumping large solid articles.

Rotary disc pumps have been known for a considerable length of time. Such pumps, however, have not gained widespread use because they have been unable in the past to compete effectively with positive displacement pumps and bladed impeller pumps for the pumping of fluids.

The rotary disc pumps typically employ a multiplicity of closely spaced flat plain discs rotating within the pump housing. The pumping effect is obtained by frictional and shear forces developed between the rotating discs and the fluid. It has always been considered necessary that the discs be closely spaced in order to be effective. The prior art is exemplified by the following prior art references:

U.S. Patent No. 1,061,142, issued May 16, 1919 to N. Tesla.

U.S. Patent No. 2,087,834, issued July 20, 1937 to Brown et al.

U.S. Patent No. 3,487,784, issued January 6, 1970 to Rafferty et al.

U.S. Patent No. 3,644,051, issued February 22, 1972 to Schapiro.

U.S. Patent No. 4,025, 225, issued May 24, 1977 to Durant.

Other patents of interest include British Specification No. 179,043, dated May 4, 1922 to N. Tesia, and

French Patent Specification No. 866,706, issued May 31, 1941 to Girodin.

These pumps are all based on the theory that friction of the fluid on the surface of the plates of the rotor during rotation of the rotor develops centrifugal force, propelling the fluid outward toward the periphery of the plates. These, however, recognise the necessity for maintaining a fairly close spacing between the adjacent discs. The Rafferty patent, cited above, U.S. 3,487,784, suggests the use of a special disc-type pump for pumping blood. It also recognises that for pumping blood, in order to avoid high forces on the blood, the spacing between the discs should be not less than 0.64 cm. He does not, however, recognise the ability of the pump to function with a greater spacing or to pump solid articles.

A further pump is disclosed in Swiss Patent specification No. 393092 which shows a twin vaned impeller for pumping liquid suspension.

The pumping of coal slurries and similar materials has been carried out in the past with bladed impeller type pumps. Such pumps, however, under these conditions are subjected to a very high wear rate and therefore have a very short life. They are also subject to frequent stoppage due to plugging.

The applicant has discovered the ability of the disc pump to function with a greater spacing between the disc. He has also discovered that such pumps can be utilised for pumping of fragile articles. This has subsequently led to the discovery that the pump can also handle large solid articles in a fluid medium so long as the articles can be maintained suspended within the medium. The applicant has demonstrated the pumping of solid articles, such as marbles and gravel, for example. These have been pumped at heights of 4.57 m above the pump outlet with no apparent damage to the pump or to the article. Similarly, live fish and other articles have also been pumped.

It is therefore desirable that a pump be available which is capable of effectively conveying large solid articles in a fluid medium at a reasonable pressure head for a reasonable distance.

According to the present invention there is provided a pump comprising a housing having walls defining an impeller chamber, an inlet coaxial with and communicating with the chamber, an outlet communicating with and extending outward with the outermost wall thereof at a tangent to the outer periphery of said chamber, an impeller rotatably mounted coaxially within the impeller chamber in the housing, the impeller chamber being cylindrical, and the impeller including a first pair of coaxially disposed flat smooth continuous surface discs closely spaced a first distance (S) apart, defining a first path and so disposed within the housing to permit free flow of fluid via said first path therebetween to the outlet, characterised in that a third disc is spaced a second distance (d) from an adjacent one of the first pair of discs, the second distance (d) being greater than the first distance (S) whereby the third disc defines a second path for unobstructed passage of articles of a predetermined size greater than said first distance (S) from the inlet past the discs via said second path to the outlet.

The invention also includes a method of transporting material from a first location to a second location comprising the steps of selecting a rotary disc impeller pump having an inlet and an outlet, and connecting said pump in conduit means extending between said first location and said second location, characterised by the steps of providing the impeller pump with, at least one pair of coaxially disposed flat smooth continuous surface discs closely spaced a first distance (S) apart so as to define a first path therebetween to the outlet and a third disc spaced a second distance (d) from the adjacent disc of the pair of discs so as to define a second path therebetween to the outlet, selecting material in the form of solid articles of a predetermined size to be transported, positioning said pair of discs and the third disc within the pump such that the second distance is greater than the first distance whereby the second path provides for unobstructed passage of said solid articles from the inlet to the outlet of the pump, introducing said articles into a liquid, and thereby forming a mixture, and introducing said mixture into the inlet of the pump at said first location, so as to pass through the conduit means and via the said second path in the pump to the second location.

Brief Description of the Drawings

The invention will now be described by way of example with reference to the accompanying drawings in which:

Figure 1 is a diagram of a typical use of the pump for moving large articles or pieces of material;

Figure 2 is a front elevational view of the pump with a portion cut away; and

Figure 3 is a sectional view taken on line 3—3 of Figure 2.

Detailed Description of a Preferred Embodiment

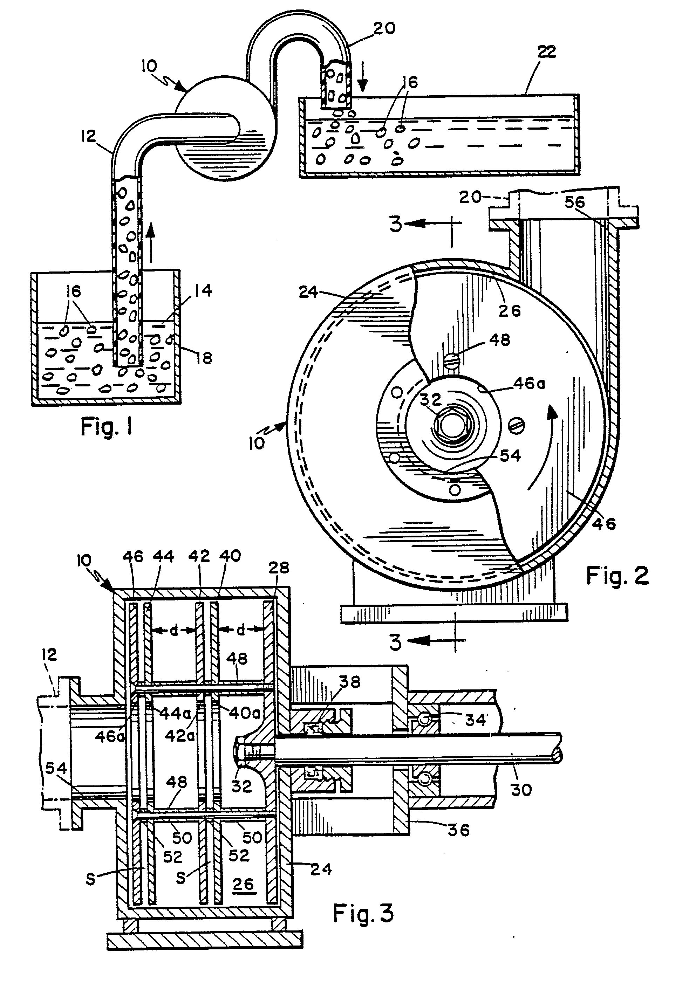

Turning now to the drawings, particularly Figure 1, there is illustrated a pump designated by the numeral 10 having an inlet conduit 12 pumping a liquid such as water 14 and solid articles 16 from a tank 18 by way of an outlet conduit 20 to a second tank 22. The solid articles 16 can be of any substantial size and can be pumped so long as suspended in the water or other fluid and the pump passage is sufficiently large. These articles or particles 16 can be any article and can be substantially any size. The articles can be fruits and vegetables, such as apples, oranges, grapes, cherries, tomatoes, melons, potatoes, turnips, cucumbers, and the like. Other vegetables, such as leafy vegetables, can also be transported. These articles can also be hard solid articles such as marbles, rock, glass, coal slurry, gravel and other similar particles.

An important feature of the present invention is the use of combination of closely spaced pairs of discs in combination with widely spaced discs. In this combination, the closely spaced discs provide for an increased pressure head, while the larger spaces provide for the passage of articles or particles therethrough.

Turning to Figure 2, the pump 10 includes a housing 24 of a substantially cylindrical configuration having a substantially cylindrical chamber therein designated by the numeral 26. The rotor, as best seen in Figure 3, comprises a drive disc 28 mounted on a drive shaft 30 by suitable means such as a nut 32. The drive shaft is mounted by a suitable bearing at 34 in a bearing support bracket 36 and is sealed by suitable seal means 38. The rotor comprises the drive disc 28 and any number of other discs disposed in pairs, such as pairs 40 and 42, closely spaced together a distance (d) from the drive disc 28. Similarly, a second pair of discs 44 and 46 may be similarly spaced a distance (d) from the first pair of discs 40 and 42.

The discs in each pair are spaced a distance (S). This spacing (S) between the discs of the or each pair is preferably adjusted to provide the necessary head or increased head as needed in the system. This spacing would depend on the size or outer diameter of the discs and the head which one desires. For example, it could vary from 0.00254 cm up to in excess of 3.81 cm. The spacing of the discs at the outer edge thereof from the housing, in other words, the spacing of the periphery of the disc, from the inner wall of the housing has been found to be critical only insofar as it relates to the size of the particles being pumped. The spacing should be sufficiently small to prevent the passage of articles between the outer periphery of the discs and the inside of the wall. The outer disc 46 is also preferably fairly closely spaced from the wall of the housing. The discs are connected together and to the drive discs 28 by means of a plurality of elongated bolts 48 extending through each disc with spacer sleeves 50 having length (d) and spacer sleeves 52 having a length (S). The spacing (d) would be, in most cases, related to the size or diameter of the inlet 54 and the maximum size article to be pumped and should be at least 0.635 cm.

Pumps have been tested by applicant having the space (d) up to 25.4 cm. Much larger spacings are possible along with larger diameters for the discs. When large spacings (d) are used for the pumping or handling of large articles, it is also desirable to have pairs of discs spaced distance (S) apart to increase the pressure head. However, such construction is not always necessary, but of course depends on the pressure head required.

One pump which has been undergoing testing for the pumping of small fish, such as anchovies, has a s spacing (d) of 11.43 cm on a 76.2 cm diameter disc capable of lifting the fish in a stream or flow of water a height of 27.43 m with a capacity of 22720 litres per minute at 900 rpm's. Fish have been pumped a distance of 609.6 m through a 40.64 cm pipe with a 27.43 m lift.

In the construction of the pump, the discs are each constructed to have an opening in the center thereof of a diameter which should be at least as large as the opening or inlet 54 of the pump. These inlet diameters 40a, 42a, 44a and 46a will be larger than the size of the articles to be pumped, and preferably larger than the inlet diameter. This will ensure that articles which go into the pump will pass through the inner diameters of the disc. Preferably, the distance (d) between the discs will also have a specific relationship to the articles to be pumped which must also have a relationship to the inlet 54 of the pump. In this way, there is less likelihood of the pump jamming.

The outlet of the pump is directly off the periphery of the outer diameter of the housing, as shown in Figure 2, and includes an outlet 56 of a suitable diameter to carry the articles. The outlet extends tangentially of the outer diameter of the housing and rotor.

Pumps in accordance with the invention, and those in accordance with my co-pending application filed concurrently herewith, have undergone numerous tests and have been found to out-perform conventional impeller pumps under certain circumstances. For example, a pump has been undergoing tests for the pumping of glass particles of all different sizes and shapes in water into a dewatering tank for recovering the spillage, etc., from a glass factory. The disc spacings (d) in this pump are 0.95 cm and the pump has undergone extensive tests without noticeable wear. This handling of these articles would not be possible with a bladed impeller pump, which would impact the glass particles with a resulting rapid wear and deterioration in the impeller.

A similar pump having a spacing (d) of approximately 3.81 cm between discs of approximately 30.48 cm in diameter is undergoing tests for pumping raw sewage having the usual debris that accumulates in sewage. Such pump performs very well without the stoppage that normally occurs with a bladed impeller pump.

A similar pump with a disc spacing of approximately 3.175 cm on 30.48 cm diameter discs is undergoing tests in pumping coal slurry. This pump has performed very well and has not been subjected to the stoppage problems that normally occur with bladed impeller type pumps. The stoppage and rapid wear of the impeller and casing has been a major problem with the use of bladed impeller type pumps in the pumping of coal slurry.

A pump for pumping grout utilizing a 3.175 cm spacing between discs of a 35.56 cm diameter has been undergoing tests and has been found to be satisfactory for pumpings of slurries over short distances. A problem has been found to arise where different densities of materials are pumped, resulting in stoppage of the lines a distance downstream of the pump.

Thus, the pump of the present invention has been found to be ideally suited for certain applications wherein solid particles are being pumped in a fluid medium.

**Claims**

1. A pump (10) comprising:
a housing (24) having walls defining an impeller chamber (26),
an inlet coaxial with and communicating with the chamber (26),
an outlet (56) communicating with and extending outward with the outermost wall thereof at a tangent to the outer periphery of said chamber,
an impeller rotatably mounted coaxially within the impeller chamber (26) in the housing (24), the impeller chamber (26) being cylindrical, and the impeller including a first pair (40, 42) of coaxially disposed flat smooth continuous surface discs closely spaced a first distance (S) apart, defining a first path and so disposed within the housing (24) to permit free flow of fluid via said first path therebetween to the outlet (56), characterised in that a third disc (28) is spaced a second distance (d) from an adjacent one of the first pair of discs (40, 42), and the second distance (d) is greater than the first distance (S), whereby the third disc (28) defines a second path for unobstructed passage of articles of a predetermined size greater than said first distance (S) from the inlet (54) past the discs (40, 42) via said second path to the outlet (56).

2. A pump according to claim 1 characterised in that the third disc (28) comprises a drive disc (28) mounted on a drive shaft (30).

3. A pump accoridng to claim 2 characterised in that the first pair of discs (40, 42) include an opening (40a, 42a) in the center thereof to provide passage for said articles of a predetermined size.

4. A pump according to claim 1, 2 or 3 characterised in that a second pair of discs (44, 46) are disposed adjacent inlet (54) and include an opening (44a, 46a) in the center thereof to provide passage for said articles of a predetermined size, the second pair of discs (44, 46) being spaced from the adjacent disc (42) of said first pair of discs (40, 42) and defining a third path for unobstructed passage of articles from the inlet (54) to the outlet (56).

5. A pump according to any one of the preceding claims characterised in that said first distance (S) is between 0.00254 cm and 0.635 cm and said second distance (d) is at least 0.635 cm.

6. A pump according to claim 2 characterised in that the said first distance (S) is between 0.00254 cm and 3.81 cm.

7. A pump according to claim 6 characterised in that the said first pair of discs include
means defining a hole through the center thereof and defining an inner diameter thereof, and
a plurality of bolts connecting said discs together closely adjacent the inner diameter thereof.

8. A pump according to claim 2 characterised in that the said first distance (S) is greater than 3.81 cm.

9. A method of transporting material from a first location (18) to a second location (22) comprising the steps of:
selecting a rotary disc impeller pump (10) having an inlet (54) and an outlet (56); and connecting said pump (10) in conduit means (12, 20) extending between said first location (18) and said second location (22), characterised by the steps of:
providing the impeller pump (10) with, at least one pair (40, 42) of coaxially disposed flat smooth continuous surface discs closely spaced a first distance (S) apart so as to define a first path therebetween to the outlet (56), and a third disc (28) spaced a second distance (d) from the adjacent disc (40) of the pair of discs (40, 42), so as to define a second path therebetween to the outlet (56);

selecting material in the form of solid articles of a predetermined size to be transported,

positioning said pair of discs (40, 42) and the third disc (28) within the pump (10) such that the second distance (d) is greater than the first distance (S) whereby the second path provides for unobstructed passage of said solid articles from the inlet (54) to the outlet (56) of the pump (10),

introducing said articles into a liquid, and thereby forming a mixture, and

introducing said mixture into the inlet of the pump at said first location (18), so as to pass through the conduit means (12, 20) and via the said second path in the pump (10), to the second location (22).

10. A method according to claim 9 characterised in that the said solid articles are selected from;

fruits, vegetables, marbles, rocks, coal particles and glass particles.

**Revendications**

1. Pompe (10) comportant:
— un carter (24) ayant des parois formant une chambre (29) pour un rotor,
— une entrée coaxiale à la chambre (26) et communiquant avec celle-ci,
— une sortie (56), communiquant avec la paroi la plus extérieure et s'étendant vers l'extérieur suivant une tangente à la périphérie extérieure de la chambre,
— un rotor monté à rotation coaxialement dans la chambre de rotor (26) à l'intérieur du carter (24), la chambre de rotor (26) étant cylindrique et le rotor se composant d'une première paire (40, 42) de disques plats, lisses, continus, diposés coaxialement, et rapprochés avec un premier intervalle (5), formant un premier chemin, en étant disposés à l'intérieur du boîtier (24) pour permettre l'écoulement libre du fluide par le premier chemin entre ceux-ci et la sortie (56), caractérisée en ce qu'un troisième disque (28) est espacé d'une second distance (d) de l'un des disques (40, 42) de la première paire et la seconde distance (d) est supérieure à la première distance (S), le troisième disque (28) définissant un second chemin pour un passage non obstrué de produit de dimensions prédéterminées, est supérieur à la première distance (S) à partir de l'entrée (56) en passant sur les disques (40, 42) par l'intermédiaire du second chemin vers la sortie (56).

2. Pompe selon la revendication 1, caractérisée en ce que le troisième disque (28) est un disque d'entraînement (28) monté sur un arbre d'entraînement (30).

3. Pompe selon la revendication 2, caractérisée en ce que la première paire de disques (40, 42) comporte un orifice (40a, 42a) en son centre pour former un passage pour les produits d'une dimension prédéterminée.

4. Pompe selon la revendication 1, 2 ou 3, caractérisée en ce qu'une seconde paire de disques (44, 46) est disposée au voisinage de l'entrée (54) et comporte un orifice (44a, 46a) en son centre pour former un passage pour des produits d'une dimension prédéterminée, la seconde paire de disques (44, 46) étant espacée du disque adjacent (42) de la première paire de disques (40, 42) et définissant un troisième chemin pour former un passage non obstrué pour les produits, de l'entrée (54) vers la sortie (56).

5. Pompe selon l'une quelconque des revendications précédentes, caractérisée en ce que la première distance (S) est comprise entre 0,00254 cm et 0,635 cm et la seconde distance (d) est au moins égale à 0,635 cm.

6. Pompe selon la revendication 2, caractérisée en ce que la première distance (S) est comprise entre 0,00254 cm et 3,81 cm.

7. Pompe selon la revendication 6, caractérisée en ce que la première paire de disques se compose d'un moyen formant un orifice à travers son centre et définissant un diamètre intérieur de celui-ci, et,
— et un ensemble de boulons reliant entre eux les disques, au voisinage immédiat du diamètre intérieur.

8. Pompe selon la revendication 2, caractérisée en ce que la première distance (S) est supérieure à 3,81 cm.

9. Procédé de transport de produits d'un premier lieu (18) à un second lieu (22) comprenant les étapes suivantes:
— sélection d'une pompe à rotor à disque rotatif (10) ayant une entrée (54) et une sortie (56), et à relier la pompe (10) à une conduite (12, 20) s'étendant entre un premier lieu (18) et un second lieu (22), caractérisé par les étapes suivantes:
— on fournit la pompe à rotor (10) avec au moins une paire (40, 42) de disques de surface continue, lisse, plate, disposés coaxialement, étroitement rapprochés d'une première distance (S) de façon à définir un premier chemin entre eux et la sortie (56) et un troisième disque (28) espacé d'une seconde distance (d) du disque adjacent (40) de la paire de disques (40, 42) de façon à définir un second chemin entre eux vers la sortie (56),
— on choisit les produits sous la forme de produits solides d'une dimension prédéterminée pour les transporter,
— on positionne la paire de disques (40, 42) et le troisième disque (28) dans la pompe (10) de façon que la seconde distance (d) soit supérieure à la première distance (S), le second chemin formant un passage non obstrué pour les produits solides entre l'entrée (54) et la sortie (56) de la pompe (10),
— on introduit les produits dans un liquide et on forme ainsi un mélange, et
— on introduit le mélange dans l'entrée de la pompe au premier lieu (18) de façon à passer à travers la conduite (12, 20) et par le second chemin dans la pompe (10) vers le second lieu (22).

10. Procédé selon la revendication 9, caractérisé en ce que les produits solides sont choisis parmi:
— fruits, végétaux, marbres, pierres, particules de charbon et particules de verre.

**Patentansprüche**

1. Pumpe (10) bestehend aus einem Gehäuse (24) mit einer eine Laufradkammer (26) bildenden Wänden,

einem Einlaß, der koaxial zu der Kammer (26) angeordnet ist und mit dieser kommuniziert, einem Auslaß (56), der mit der Kammer kommuniziert und sich nach außen an deren äußerster Wand tangential zum dem Außenumfang der Kammer erstreckt, einem Laufrad, das drehbar koaxial in der Laufradkammer (26) in dem Gehäuse (24) befestigt ist, wobei die Laufradkammer (26) zylinderförmig ausgebildet ist und wobei zu dem Laufrad ein erstes Paar (40, 42) koaxial angeordneter flacher glatter Scheiben mit ununterbrochener Oberfläche gehört, die dicht um einen ersten Abstand (S) voneinander beabstandet sind, einen ersten Weg bilden und so innerhalb des Gehäuses (24) angeordnet sind, daß über den dazwischen befindlichen Weg eine freie Strömung von Fluid zu dem Auslaß möglich ist, dadurch gekennzeichnet, daß eine dritte Scheibe (28) von einer der angrenzenden Scheiben des ersten Paares (40, 42) um einen zweiten Abstand (d) beabstandet ist, und daß der zweite Abstand (d) größer als der erste Abstand (S) ist, wobei die dritte Scheibe (28) einen zweiten Weg für den ungehinderten Durchtritt von Gegenständen einer vorbestimmten Größe die größer als der erste Abstand (S) ist, von dem Einlaß (54) vorbei an den Scheiben (40, 42) über den zweiten Weg zu dem Auslaß (56) bildet.

2. Pumpe nach Anspruch 1, dadurch gekennzeichnet, daß die dritte Scheibe (28) aus einer Antriebsscheibe (28) besteht, die auf einer Antribeswelle (30) befestigt ist.

3. Pumpe nach Anspruch 2, dadurch gekennzeichnet, daß das erste Paar Scheiben (40, 42) einer Öffnung (40a, 42a) in deren Mitte zum Vorsehen eines Durchtritts für die Gegenstände einer vorbestimmten Größe aufweist.

4. Pumpe nach Anspruch 1, 2 oder 3, dadurch gekennzeichnet, daß ein zweites Paar Scheiben (44, 46) neben dem Einlaß (54) angeordnet ist und in seiner Mitte eine Öffnung (44a, 46a) zum Vorsehen des Durchtritts für die Gegenstände einer vorbestimmten Größe aufweist, wobei das zweite Paar Scheiben (44, 46) von der benachbarten Scheibe (42) des ersten Scheibenpaars (40, 42) beabstandet ist und einen dritten Weg für den ungehinderten Durchtritt von Gegenständen aus dem Einlaß (54) zum dem Auslaß (56) bildet.

5. Pumpe nach einem der vorangehenden Ansprüche, dadurch gekennzeichnet, daß der erste Abstand (S) zwischen 0,00254 cm und 0,635 cm liegt und der zweite Abstand (d) wenigstens 0,635 cm beträgt.

6. Pumpe nach Anspruch 2, dadurch gekennzeichnet, daß der erste Abstand (S) zwischen 0,00254 cm und 3,81 cm liegt.

7. Pumpe nach Anspruch 6, dadurch gekennzeichnet, daß das erste Scheibenpaar eine Einrichtung, die durch seine Mitte ein Loch und einen Innendurchmesser desselben bildet, und zahlreiche Bolzen aufweist, die die Schieben miteinander dicht nahe deren Innendurchmesser verbinden.

8. Pumpe nach Anspruch 2, dadurch gekennzeichnet, daß der erste Abstand (S) größer als 3,81 cm ist.

9. Verfahren zum Transport von Material von einer ersten Stelle (18) zu einer zweiten Stelle (22), bestehend aus den Verfahrensschritten: Auswahl einer Drehscheiben-Laufradpumpe (10) mit einem Einlaß (54) und einem Auslaß (56); und Einschalten der Pumpe (10) in eine Leitungseinrichtung (12, 20), die sich zwischen der ersten Stelle (18) und der zweiten Stelle (22) erstreckt, gekennzeichnet durch die Verfahrensschritte:

Vorsehen einer Laufradpumpe (10) mit wenigstens einem Paar (40, 42) koaxial angeorneter flacher glatter Scheiben mit einer ununterbrochenen Oberfläche, die dicht mit einem ersten Abstand (S) voneinander derart angeordnet sind, daß sie dazwischen einen ersten Weg zu dem Auslaß (56) bilden, und einer dritten Scheibe (28), die von der benachbarten Scheibe (40) des Scheibenpaars (40, 42) um einen zweiten Abstand (d) derart beabstandet ist, daß dazwischen ein zweiter Weg zu dem Auslaß (56) gebildet wird;

Auswählen eines zu transportierenden Materials in Form von festen Gegenständen einer vorbestimmten Größe,

Anordnen des Scheibenpaars (40, 42) und der dritten Scheibe (28) derart innerhalb der Pumpe (10) daß der zweite Abstand (d) größer als der erste Abstand (S) ist, wobei der zweite Weg einen ungehinderten Durchtritt der festen Gegenstände von dem Einlaß (54) zu dem Auslaß (56) der Pumpe (10) vorsieht,

Einführen der Gegenstände in eine Flüssigkeit unter Bildung eines Gemisches, und

Einführen des Gemisches in den Einlaß der Pumpe an der ersten Stelle (18) derart, daß es durch die Leitungseinrichtung (12, 20) und über den zweiten Weg der Pumpe (10) zu der zweiten Stelle (22) tritt.

10. Verfahren nach Anspruch 9, dadurch gekennzeichnet, daß die festen Gegenstände aus Früchten, Gemüsen, Marmor, felsigem Gestein, Kohleteilen und Glasteilen ausgewählt werden.

Fig. 1

Fig. 2

Fig. 3